# EUROPÄISCHE PATENTSCHRIFT

(11) **EP 1 745 637 B1**
(45) Veröffentlichungstag und Bekanntmachung des Hinweises auf die Patenterteilung: **17.09.2008**
(21) Anmeldenummer: 05774310.6
(22) Anmeldetag: 11.07.2005
(51) Int. Cl.: H04M 9/08

(54) **KONFERENZ-ENDGERÄT MIT ECHOREDUKTION FÜR EIN SPRACHKONFERENZSYSTEM**
CONFERENCE TERMINAL COMPRISING ECHO REDUCTION FOR A VOICE CONFERENCING SYSTEM
TERMINAL DE CONFERENCE A REDUCTION D'ECHO POUR UN SYSTEME DE CONFERENCE

(30) Priorität: 13.07.2004 DE 102004033866
(43) Veröffentlichungstag der Anmeldung: 24.01.2007
(73) Patentinhaber: Fraunhofer-Gesellschaft zur Förderung der angewandten Forschung e.V., 80686 München (DE)
(72) Erfinder: TITTEL, Martin, 91301 Forchheim (DE); LUTZKY, Manfred, 90427 Nürnberg (DE); HUPP, Jürgen, 90425 Nürnberg (DE)
(74) Vertreter: Zinkler, Franz
(86) Internationale Anmeldenummer: PCT/EP2005/007498
(87) Internationale Veröffentlichungsnummer: WO 2006/005566

(56) Entgegenhaltungen:
- WO-A-96/04744
- US-A1- 2004 116 130
- US-B1- 6 408 327
- PATENT ABSTRACTS OF JAPAN Bd. 1998, Nr. 10, 31. August 1998 (1998-08-31) & JP 10 136100 A (NEC TELECOM SYST LTD), 22. Mai 1998 (1998-05-22)

## Beschreibung

Die vorliegende Erfindung bezieht sich im allgemeinen auf ein Konferenz-Endgerät für ein Sprachkonferenzsystem, im speziellen auf ein Konferenz-Endgerät mit Echoreduktion für ein digitales Sprachkonferenzsystem.

Sprachkonferenzsysteme werden überall dort eingesetzt, wo eine Verständigung innerhalb einer Personengruppe auf direktem Wege aufgrund zu großer Entfernung, zu hohem Lärmpegel oder anderer Gründe nicht möglich ist. Zu unterscheiden sind hierbei Systeme, bei denen die miteinander kommunizierenden Personen räumlich sehr weit entfernt sind, so dass eine direkte akustische Koppelung zwischen den Personen nicht gegeben ist und diese die anderen Konferenzteilnehmer jeweils nur über das Sprachkonferenzsystem hören können, und solche Konfigurationen, in denen die an der Konferenz teilnehmenden Personen aufgrund großer räumlicher Nähe andere Personen sowohl auf direktem akustischem Wege als auch über das Sprachkonferenzsystem wahrnehmen können.

Die erste Art von Sprachkonferenzsystemen entspricht einer Telefonkonferenz gemäß dem Stand der Technik. Bei einer Telefonkonferenz entstehen zwar auf der Übertragungsstrecke Verzögerungszeiten, die störende Echos hervorrufen können. Jedoch existiert bei diesen Systemen kein einheitliches Konferenzsignal, sondern jeder Teilnehmer erhält ein spezielles Konferenzsignal, in dem sein eigenes Signal nicht vorhanden ist. Außerdem gibt es keine direkte, akustische Kopplung zweier Teilnehmer, da diese sich an völlig unterschiedlichen Orten aufhalten.

Die zweite Art von Sprachkonferenzsystemen, bei denen Personen andere Konferenzteilnehmer sowohl auf direktem akustischem Wege als auch über das Sprachkonferenzsystem wahrnehmen können, werden z.B. in Besprechungsräumen, Hörsälen, Kongresshallen oder ähnlichem eingesetzt. Eine Mehrzahl von Teilnehmern soll hierbei die Gelegenheit haben, einen Sprachbeitrag zu liefern, und alle Teilnehmer sollen die Sprachbeiträge der anderen Teilnehmer hören können. Hierbei ist der Diskussionsbeitrag eines einzelnen Teilnehmers auf direktem akustischem Wege nicht im ganzen Raum verständlich, kann aber von Personen in der Nähe des Sprechers durchaus auf direktem Wege wahrgenommen werden.

Zu unterscheiden sind weiterhin Sprachkonferenzsysteme, bei denen eine drahtgebundene Übertragung erfolgt, und solche, bei denen die Übertragung der Sprachsignale auf drahtlosem Wege erfolgt. Drahtgebundene Systeme gemäß dem Stand der Technik haben den Vorteil, dass die Übertragungskapazität einer drahtgebundenen Übertragungsstrecke sehr hoch ist. Die Audiosignale können bei solchen Systemen bei Verwendung von hochwertigen Kabeln analog übertragen werden. Günstiger ist es jedoch, eine unkomprimierte digitale Audiosignalübertragung zu verwenden. Die Laufzeiten der Audiosignale auf einem solchen Kabel sind bei einer räumlich begrenzten Konferenz so kurz, dass keine hörbaren entfernten Echos entstehen. Lediglich ein lokales Echo wird kompensiert, um Rückkoppelungsgeräusche in einem Endgerät zu vermeiden.

Allerdings besteht gegenwärtig der Trend, Sprachkonferenzsysteme für Besprechungsräume, Hörsäle, Kongresshallen oder ähnliches drahtlos auszuführen. Dies erhöht die Flexibilität bei der Konfiguration eines Systems und verringert deutlich die Installationskosten, da außer einer Stromversorgung keine weitere Verkabelung nötig ist. Im übrigen ermöglicht eine drahtlose Ausführung eines Sprachkonferenzsystems die Durchführung einer Sprachkonferenz selbst dann, wenn die teilnehmenden Personen nicht fest an einen Standort gebunden sind und sich beispielsweise im Raum bewegen.

Allerdings muss festgehalten werden, dass die technischen Herausforderungen bei einem funkbasierten Sprachkonferenzsystem wesentlich höher sind als die bei einem drahtgebundenen.

Gemäß dem Stand der Technik werden zumeist analoge Systeme oder digitale Systeme ohne Komprimierung verwendet. Die Signallaufzeit bei der Übertragung eines akustischen Signals über ein solches System ist typischerweise gering. Insbesondere besteht nur eine geringe Verzögerung zwischen dem Sprachsignal eines sprechenden Teilnehmers und dem von dem Sprachkonferenzsystem über einen einheitlichen Rückkanal gelieferten Summen-Konferenzsignal, das den Sprachbeitrag des sprechenden Teilnehmers enthält und an dem Lautsprecher des sprechenden Teilnehmers ausgegeben wird. Aufgrund der geringen Verzögerung wird das zum Sprecher zurück übertragene eigene Sprachsignal nicht als störendes Echo empfunden.

Die für ein funkbasiertes Sprachkonferenzsystem zur Verfügung stehenden Funkressourcen sind aber sehr begrenzt. Dies macht es in vielen Fällen erforderlich, die Sprachsignale digital zu übertragen und vor der Übertragung zur Reduzierung der Datenmenge und zum Schutz vor Übertragungsfehlern zu codieren. Verwendet das Sprachkonferenzsystem digitale Funkübertragung und digitale Audiocodierung, so entsteht allerdings auf den Übertragungswegen eine Verzögerung des Signals im zweistelligen Millisekundenbereich. Dies Anders als bei herkömmlichen Telefonkonferenzsystemen ist es bei drahtlosen Sprachkonferenzsystemen aufgrund der beschränkten Funkressourcen weiterhin nicht möglich, dass jeder Teilnehmer über einen exklusiven Rückkanal ein spezielles Konferenzsignal von der Zentraleinheit empfängt, in dem sein eigenes Signal nicht vorhanden ist. Vielmehr wird in vielen Fällen allen Teilnehmern ein einheitliches Konferenzsignal zur Verfügung gestellt, welches vergleichbar mit einem Rundfunksignal an alle ausgestrahlt wird. Somit weist das einheitliche Konferenzsignal eine deutliche Zeitverzögerung im zweistelligen Millisekundenbereich gegenüber dem Sprachsignal eines Sprechers auf. Die Folge dieser Verzögerung ist es, dass ein Sprecher ein deutlich störendes Echo seiner eigenen Sprachäußerung wahrnimmt. Dies schränkt gegenwärtig die Verwendbarkeit einer digitalen Signalübertragung in Verbindung mit einer verzögerungsbehafteten Kodierung für Sprachkonferenzsysteme stark ein.

Dennoch besteht gegenwärtig die Tendenz, Sprachkonferenzsysteme mit digitaler drahtloser Übertragung auszuführen.

Um die dadurch entstehenden Probleme noch besser verstehen zu können, wird hier etwas detaillierter auf die Funktionsweise eines Sprachkonferenzsystems eingegangen. Alle Personen sollen über drahtlos angebundene Endgeräte an einer Konferenz teilnehmen können. Dabei können alle Teilnehmer jederzeit das Summensignal aller anderen sprechenden Teilnehmer über einen in ihrem Endgerät eingebauten Lautsprecher hören. Das Summensignal wird in einer Zentraleinheit gebildet und ständig an alle Endgeräte übermittelt. Bei Betätigung einer Sprechtaste wird das Sprechsignal des Mikrofons eines Teilnehmers von einem Endgerät zu der Zentraleinheit übertragen und dort in das Summensignal eingespeist.

In einem solchen System entstehen verschiedene Arten von Echos. Ein lokales Echo (Rückkopplung) entsteht durch akustische und/oder elektromagnetische Kopplung von dem Lautsprecher zu dem Mikrofon eines Endgeräts. Ein solches Echo kann mit bekannten Methoden zur Echokompensation reduziert werden.

Besondere Probleme entstehen dann, wenn die Laufzeit eines übertragenen Sprachsignals von einem Endgerät zu einem anderen Endgerät größer als etwa 20 Millisekunden ist. Dies ist insbesondere bei digitalen Sprachkonferenzsystemen der Fall, bei denen ein Sprachsignal codiert über einen Übertragungskanal übertragen wird. Bei der Codierung entstehen große Verzögerungen im zweistelligen Millisekundenbereich. Dies führt zu ausgeprägten Echos.

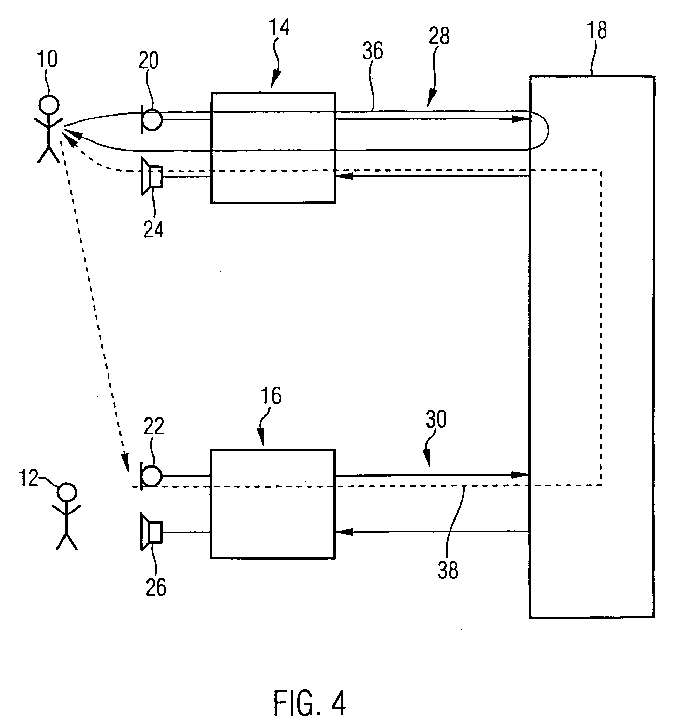

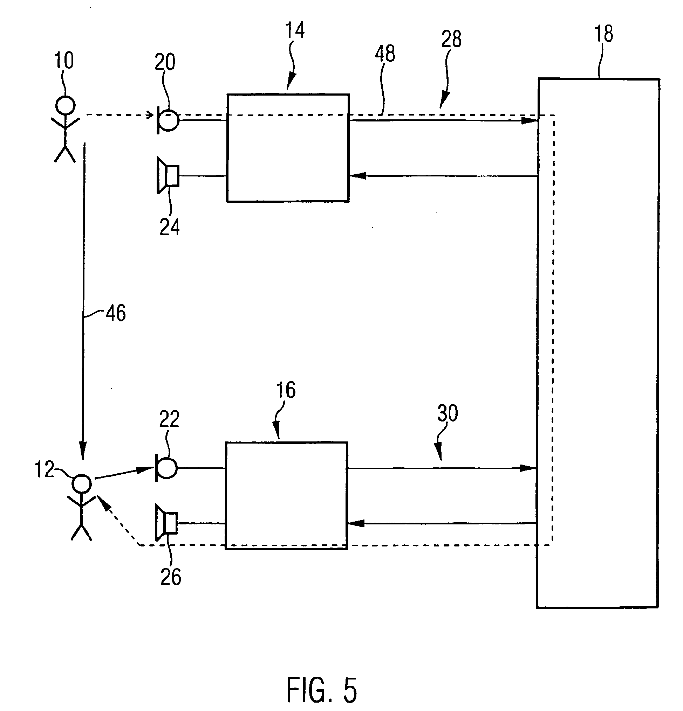

Die Entstehung von Echos wird im folgenden anhand von Fig. 4 und Fig. 5 näher beschrieben. Fig. 4 zeigt einen Ausschnitt aus einem Blockschaltbild eines herkömmlichen Sprachkonferenzsystems. Gezeigt sind hier ein erster Konferenzteilnehmer 10, ein zweiter Konferenzteilnehmer 12 sowie zwei zugehörige Konferenz-Endgeräte 14 bzw. 16. Weiterhin umfasst das Sprachkonferenzsystem eine Konferenz-Zentraleinheit 18. Die beiden Konferenz-Endgeräte 14 bzw. 16 umfassen je ein Mikrofon 20, 22 sowie je einen Lautsprecher 24, 26. Das erste Konferenz-Endgerät 14 des ersten Konferenzteilnehmers 10 sowie das zweite Konferenz-Endgerät 16 des zweiten Teilnehmers 12 ist mit der Konferenz-Zentraleinheit 18 über eine bidirektionale Verbindung 28 bzw. 30 verbunden.

Ausgehend von der Struktur eines Sprachkonferenzsystems wird im folgenden die Entstehung von Echos näher erläutert. Lokale Echos, d.h. die Rückkopplung von einem Lautsprecher 24, 26 zu einem Mikrofon 20, 22 desselben Endgeräts werden hier nicht näher beschrieben, da sie mit bekannten technischen Maßnahmen problemlos unterdrückt bzw. reduziert werden können. Betrachtet wird zunächst das Echo, das ein erster Konferenzteilnehmer 10, der selbst spricht, wahrnimmt. Dabei ist zu berücksichtigen, dass der erste Konferenzteilnehmer 10 das von ihm erzeugte akustische Sprachsignal direkt mit seinen Ohren wahrnimmt. Weiterhin folgt das von dem Sprecher erzeugte akustische Signal einem Signalweg, der mit 36 bezeichnet ist. Über das Mikrofon 20 des ersten Konferenz-Endgeräts 14 wird das Sprachsignal des ersten Konferenzteilnehmers aufgenommen. Das erste Konferenz-Endgerät 14 leitet dieses dann zu der Konferenz-Zentraleinheit 18 weiter. Dort wird es in das Konferenz-Summensignal aufgenommen. Durch eine digitale Funkübertragung und insbesondere die digitale Signalverarbeitung und die Codierung und Decodierung der digital übertragenen Sprachsignale entsteht auf den Übertragungswegen eine merkliche Verzögerung des Signals im zweistelligen Millisekundenbereich. Das Sprachsignal des ersten Konferenzteilnehmers wird daraufhin von der Konferenz-Zentraleinheit 18 wieder an das erste Konferenz-Endgerät 14 übertragen. Dort wird es auf dem Lautsprecher 24 ausgegeben und von dem ersten Konferenzteilnehmer 10 wahrgenommen. Somit nimmt der erste Konferenzteilnehmer 10 nicht nur sein eigenes akustisches Sprachsignal, sondern auch ein über die Sprachkonferenz übertragenes zeitlich stark verzögertes Echosignal wahr. Wird also ein Signal nach der Konferenzbildung als Bestandteil des Konferenzsignals zu seiner Quelle zurückgesandt, entsteht ein hörbares, als störend empfundenes Echo, das als entferntes eigenes Echo bezeichnet wird.

Weiterhin ist es möglich, dass das Konferenz-Endgerät 16 eines zweiten Konferenzteilnehmers 12 sich im Sprechbetrieb befindet, während ein erster Konferenzteilnehmer 10 gerade spricht. In diesem Fall existiert ein weiterer Signalweg 38, der zu einem Echo führt. Das Sprachsignal des ersten Konferenzteilnehmers 10 wird über das Mikrofon 22 an dem zweiten Konferenz-Endgerät 16 eines zweiten Konferenzteilnehmers 12 aufgenommen und mit zeitlicher Verzögerung an eine Konferenz-Zentraleinheit 18 weitergeleitet. Dort wird es wiederum einem Konferenz-Summensignal zugeführt. Als Bestandteil des Konferenz-Summensignals wird es dann dem ersten Konferenz-Endgerät 14 des ersten Konferenzteilnehmers 10 zugeführt und dort an einem Lautsprecher 24 ausgegeben. Damit nimmt der erste Konferenzteilnehmer 10 ein verzögertes Echo seines eigenen Sprachsignals wahr. Auch dieser Effekt wird als entferntes eigenes Echo bezeichnet.

Ein weiteres entferntes eigenes Echo durch den gleichzeitigen Sprechbetrieb eines anderen Endgeräts wird durch die lokale Echoreduktion in dem anderen Endgerät vermieden.

Fig. 5 zeigt einen weiteren Auszug aus einem Blockschaltbild eines herkömmlichen Sprachkonferenzsystems. Der Aufbau des Sprachkonferenzsystems ist identisch mit dem anhand von Fig. 4 Beschriebenen und wird hier daher nicht mehr gesondert beschrieben. Insbesondere weisen gleiche Bezugszeichen auf gleiche Einrichtungen hin. Das Interesse liegt auf der Untersuchung von Signalwegen von einem ersten Teilnehmer 10, der hier als Sprecher auftritt, zu einem zweiten Konferenzteilnehmer 12, der hier als Hörer auftritt. Sind der erste Konferenzteilnehmer 10 und der zweite Konferenzteilnehmer 12 räumlich genügend nahe beieinander, so kann der zweite Konferenzteilnehmer 12 den Sprachbeitrag des ersten Konferenzteilnehmers 10 auf dem direkten akustischen Weg 46 empfangen. Weiterhin existiert ein zweiter Signalweg für das Sprachsignal des ersten Konferenzteilnehmers 10 zu dem zweiten Konferenzteilnehmer 12, der hier mit 48 bezeichnet ist. Das Sprachsignal des ersten Konferenzteilnehmers wird dabei über das Konferenz-Endgerät 14 des ersten Konferenzteilnehmers an die Konferenz-Zentraleinheit 18 übertragen und von dort an das zweite Konferenz-Endgerät 16 des zweiten Konferenzteilnehmers 12 weitergeleitet. Dabei entsteht im Falle einer digitalen codierten Audiosignalübertragung eine erhebliche Verzögerung im zweistelligen Millisekundenbereich. Entsprechend weist das von dem zweiten Konferenzteilnehmer über den Signalweg 48 durch das Sprachkonferenzsystem empfangene Sprachsignal eine merkliche Verzögerung gegenüber dem auf direktem akustischem Weg 46 aufgenommenen Sprachsignal auf. Hört der zweite Konferenzteilnehmer den Sprachbeitrag eines anderen Teilnehmers sowohl auf direktem akustischen Weg als auch zeitverzögert über das Sprachkonferenzsystem, so wird dies ebenfalls als störendes Echo empfunden. Dieses wird als entferntes fremdes Echo bezeichnet.

Weiterhin ist anzumerken, dass verschiedene Arten von Echos verschieden schwierig zu bekämpfen sind. Wie schon kurz erwähnt wurde, ist es ohne große Schwierigkeiten möglich, ein lokales Echo zu reduzieren.

Ein entferntes eigenes Echo, das dadurch entsteht, dass das eigene Konferenz-Endgerät das eigene Sprachsignal aufnimmt, an die Zentraleinheit weitergibt und von dort wiederum empfängt, kann nicht einfach unterdrückt werden. Es ist bei herkömmlichen Systemen nur daher kein Problem, weil diese eine analoge oder uncodierte digitale Übertragung benutzen, wobei kaum merkliche Signalverzögerungen auftreten. Eine digitale kodierte Sprachsignalübertragung, bei der zwangsläufig Verzögerungen auftreten, wird jedoch durch das Echo erschwert bzw. sogar unmöglich gemacht. Ein solches Echo entsteht im übrigen auf dem in Fig. 4 gezeigten Signalweg 36. Die Laufzeit auf diesem Signalweg 36 ist mit hinreichender Genauigkeit bekannt, da hierbei im wesentlichen die bekannten Verzögerungszeiten der Codier- und Decodiereinrichtungen einfließen. Noch problematischer ist die Unterdrückung eines Echos dann, wenn die Laufzeit des Signals bzw. die Differenz der Laufzeiten auf zwei verschiedenen Übertragungswegen unbekannt ist. Dies ist beispielsweise bei der Unterdrückung eines entfernten fremden Echos der Fall. Die Verzögerungszeit auf dem direkten akustischen Weg 46 ist nicht bekannt, während die Verzögerung auf einem Signalweg 48 durch das Sprachkonferenzsystem gut abgeschätzt werden kann. Somit ist die Laufzeitdifferenz zwischen dem direkten akustischen Weg 46 und dem Signalweg 48 durch das Sprachkonferenzsystem nicht bekannt. Eine Echounterdrückung ist gerade in einem solchen Fall nur sehr schwierig möglich und findet bei Sprachkonferenzsystemen gemäß dem Stand der Technik nicht statt. Das gleiche gilt für ein entferntes eigenes Echo, das dadurch entsteht, dass das eigene Sprachsignal durch das Mikrofon des sich im Sprechbetrieb befindlichen Konferenz-Endgeräts eines benachbarten Konferenzteilnehmers aufgenommen und in dem Sprachkonferenzsystem verteilt wird.

Vielmehr werden bei Sprachkonferenzsystemen gemäß dem Stand der Technik die Konferenzteilnehmer dazu aufgefordert, leise zu sprechen, um ein entferntes fremdes Echo zu reduzieren. Es soll dabei also jeder Konferenzteilnehmer so leise sprechen, dass ein benachbarter Teilnehmer ihn nur schwach auf direktem akustischem Wege wahrnehmen kann und die Verständigung auch zwischen benachbarten Teilnehmern im wesentlichen über das Sprachkonferenzsystem erfolgt. Eine solche Maßnahme ist freilich unbefriedigend, da sie nicht der natürlichen Ausdrucksform der Sprecher entspricht. Es ist somit für den Sprecher sehr unangenehm, ein herkömmliches Sprachkonferenzsystem zu verwenden, insbesondere wenn benachbarte Konferenzteilnehmer sehr nahe beieinander sind.

Die US 6,408,327 B1 beschreibt ein Verfahren und ein System zur Realisierung einer synthetischen Stereoaudiokonferenz einer Mehrzahl von Benutzern über ein lokales Netzwerk (LAN) oder ein Weitbereichsnetzwerk (WAN). Die Systemarchitektur unter Verwendung eines LAN/WAN ermöglicht eine synthetische Audiokonferenz und erlaubt eine räumlich unterschiedliche virtuelle Platzierung von anderen Parteien, die an einem Konferenzanruf beteiligt sind, am Ort eines empfangenden Benutzers. Dies erlaubt es einem Benutzer, zwischen verschiedenen anderen Parteien zu unterscheiden und zu erkennen, welche der verschiedenen anderen Parteien zu einem bestimmten Zeitpunkt spricht. Sowohl die Stereosynthese als auch die Bereitstellung der Konferenz sind Client-basierte Funktionen. Bei einem zweiten Ausführungsbeispiel sind sowohl die Stereosynthese als auch die Bereitstellung der Konferenz Server-basierte Funktionen. In einer dritten Ausführungsform ist die Stereosynthese eine Server-basierte Funktion und die Bereitstellung einer Konferenz ist eine hybride Client/Server-Funktion. Einer der Clients, der an einem Konferenzanruf beteiligt ist, sendet beispielsweise sein individuelles Signal zu dem Server. Der Server kombiniert dann die Signale und sendet ein Clientspezifisches Signal zu einem oder mehreren der Clients. Daraus ergibt sich, dass N unabhängige Signale durch den Server empfangen werden, und dass bis zu N unabhängige Signale von dem Server zu den Clients gesendet werden. N stellt eine Gesamtanzahl an Clients, die an der Konferenz beteiligt sind, dar. Das kombinierte Signal, das zu einem bestimmten Client geschickt wird, umfasst die kombinierten und synthetisierten Signale der anderen Clients aber enthält nicht das eigene Signal des Clients.

Bei dem hybriden Client/Server-System entfernt ein bestimmter Client, der von dem Server ein Multicast-Signal empfängt, seine eigene gesendete Komponente von dem Signal und gibt das verbleibende zusammengesetzte Signal, das die Konferenzsignale der anderen Benutzer in dem Konferenzanruf, aber im Wesentlichen kein Echo des betreffenden Clients umfasst, aus.

Die WO 96/04744 beschreibt ein System und ein Verfahren zur Durchführung eines Konferenzanrufs in einem Kommunikationssystem unter Verwendung einer Sprachkompression. Die genannte Schrift beschreibt somit ein Kommunikationssystem und ein Verfahren zum kosteneffizienten Durchführen eines Konferenzanrufs zwischen mehreren drahtgebundenen oder drahtlosen Telefonen. Jedes der einkommenden komprimierten Signale von den Handapparaten wird dekomprimiert und abgeschwächt, bevor die einkommenden komprimierten Signale aufeinanderaddiert werden. Die addierten Signale werden dann durch einen Digital-nach-Analog-Wandler geleitet und zu einem entfernten Konferenzteilnehmer auf der Telefonleitung geschickt. Die summierten Signale werden auch zu einem Ausgangssignal addiert. Das gesamte summierte Signal wird komprimiert und zu jedem Benutzer der Handapparate geschickt.

Es ist Aufgabe der vorliegenden Erfindung, ein Konferenz-Endgerät mit einer verbesserten Echoreduktion zu schaffen.

Diese Aufgabe wird durch ein Konferenz-Endgerät gemäß Anspruch 1 gelöst.

Die vorliegende Erfindung schafft ein Konferenz-Endgerät für ein digitales Sprachkonferenzsystem mit einer ersten Schallwandlereinrichtung, die ausgelegt ist, um aus einem akustischen Signal ein Mikrofonsignal zu erzeugen, einer zweiten Schallwandlereinrichtung, die ausgelegt ist, um aus einem Lautsprechersignal ein akustisches Signal zu erzeugen, einer Verbindungseinrichtung, die ausgelegt ist, um eine Verbindung zwischen dem Konferenz-Endgerät und einer Konferenz-Zentraleinheit zu ermöglichen, um von der Konferenz-Zentraleinheit ein Summen-Konferenzsignal zu empfangen, und einer Einrichtung zur Echounterdrückung, die ausgelegt ist, um in einem Hörbetrieb des Konferenz-Endgeräts das Mikrofonsignal oder ein davon abgeleitetes Signal so mit dem Summen-Konferenzsignal zu kombinieren, dass ein Lautsprechersignal entsteht, in dem das akustische Signal, auf dem das Mikrofonsignal basiert, reduziert ist oder um in einem Sprechbetrieb, in dem das Mikrofonsignal zu der Konferenz-Zentraleinheit übertragen wird, das Mikrofonsignal oder ein davon abgeleitetes Signal so mit dem Summen-Konferenzsignal zu kombinieren, dass ein Lautsprechersignal entsteht, in dem das akustische Signal, auf dem das Mikrofonsignal basiert, reduziert ist.

Es ist der Kerngedanke der vorliegenden Erfindung, dass es vorteilhaft ist, wenn in einem Konferenz-Endgerät eines digitalen Sprachkonferenzsystems eine Einrichtung zur Echounterdrückung aktiv ist, wenn sich das Konferenz-Endgerät in einem Hörbetrieb oder einem Sprechnbetrieb befindet. Es kann ein entferntes fremdes Echo, das in dem Hörbetrieb eines Konferenz-Endgeräts den hörenden Konferenzteilnehmer stören würde, durch eine Einrichtung zur Echounterdrückung reduziert werden, wenn diejenigen Signalanteile, die an dem Ort des hörenden Konferenzteilnehmers schon über die freie akustische Übertragungsstrecke wahrnehmbar sind, aus dem Summen-Konferenzsignal entfernt und durch den Lautsprecher des Konferenz-Endgeräts nicht wiedergegeben werden. In ähnlicher Weise kann auch ein eigenes fernes Echo unterdrückt werden, das dadurch entsteht, dass das eigene Sprachsignal von dem Konferenz-Endgerät eines benachbarten Konferenzteilnehmers aufgenommen und in das Sprachkonferenzsystem eingespeist wird.

In einem Sprechbetrieb muss bei einem digitalen Sprachkonferenzsystem aufgrund der erheblichen Laufzeiten in zweistelligen Millisekundenbereich und aufgrund der Verwendung eines einheitlichen Rückkanals, über den dem Endgerät eines sprechenden Teilnehmers das eigene Sprachsignal mit zeitlicher Verzögerung wieder zugeführt wird, ebenfalls eine Echounterdrückung vorgenommen werden.

Zu diesem Zweck sind gemäß dem Stand der Technik keine geeigneten Vorrichtungen bekannt. Somit ist es gemäß dem Stand der Technik nicht oder nur mit erheblichen Einschränkungen möglich, digitale Sprachkonferenzsysteme in ressourceneffizienter Weise zu betreiben. Ein wesentlicher Vorteil eines erfindungsgemäßen Konferenz-Endgerätes ist es, dass durch die Einführung einer Echounterdrückung die Anforderungen an die Verzögerungszeiten in einem Sprachkonferenzsystem wesentlich aufgeweicht werden können. Dies ermöglicht erst den Einsatz von Audiokodierung und einer digitalen Funkübertragung bzw. erleichtert dieses.

Der menschliche Hörer nimmt ein als störend empfundenes Echo dann wahr, wenn das menschliche Ohr ein Audiosignal zweimal zeitlich verschoben aufnimmt. Gerade bei digitalen Sprachkonferenzsystemen sind die Laufzeiten so groß, dass Echos von einem Benutzer als deutlich störend empfunden werden. Die Verzögerungszeit ist dabei gleich der Laufzeit, die ein Audiosignal benötigt, um von einem Konferenz-Endgerät zu der Konferenz-Zentraleinheit und wieder zurück zu dem Konferenz-Endgerät übertragen zu werden, einschließlich etwaiger Verzögerungen durch Codierung und Decodierung.

Während des Hörbetriebs ist eine herkömmliche Einrichtung zur Echounterdrückung inaktiv, da in diesem Falle das präzise vorhersagbare und pegelmäßig sehr starke eigene entfernte Echo nicht vorhanden ist. Somit erlaubt ein erfindungsgemäßes Konferenz-Endgerät im Gegensatz zu herkömmlichen Konferenz-Endgeräten eine Unterdrückung eines ggfs. vorhandenen entfernten fremden Echos.

In einem erfindungsgemäßen Konferenz-Endgerät ist eine Einrichtung zur Geräuschunterdrückung auch während eines Hörbetriebs aktiv. In diesem Falle wird das Mikrofonsignal zur Echounterdrückung verwendet. Das Mikrofonsignal beschreibt hierbei sehr gut das Audiosignal, das ein menschlicher Hörer wahrnimmt. Eine Signalverarbeitungseinrichtung entfernt nun all diejenigen Anteile aus dem Konferenz-Summensignal, die in dem Mikrofonsignal enthalten sind, und die damit auch ein menschlicher Hörer wahrnimmt. Somit ist sichergestellt, dass der Hörer jedes Audiosignal nur genau einmal, d.h. entweder über die freie Luftstrecke oder über das Sprachkonferenzsystem hört.

Ein erfindungsgemäßes Konferenz-Endgerät bietet den Vorteil, dass entfernte fremde Echos wirkungsvoll unterdrückt werden, die insbesondere bei verzögerungsbehafteten digitalen drahtlosen Sprachkonferenzsystemen mit codierter Übertragung zu erheblichen Beeinträchtigungen führen. Der gleiche Vorteil ergibt sich für ein entferntes eigens Echo. Es ist somit möglich, derartige digitale Sprachkonferenzsysteme einzusetzen, ohne die Konferenzteilnehmer zu einer möglichst leisen Sprechweise auffordern zu müssen, um Echos gering zu halten. Dies erhöht drastisch den Komfort bei der Benutzung eines Sprachkonferenzsystems. Weiterhin entfällt bei Verwendung eines erfindungsgemäßen Konferenz-Endgeräts die Notwendigkeit, einen Mindestabstand zwischen benachbarten Sprechern einzuhalten. Somit sind erfindungsgemäß digitale drahtlose Sprachkonferenzsysteme realisierbar, die hohe Sprachqualität und Störsicherheit bei minimalem Verdrahtungsaufwand und geringem Bedarf an Funkressourcen gewährleisten.

Bei einem bevorzugten Ausführungsbeispiel enthält das Konferenz-Endgerät eine Codiereinrichtung, die ausgelegt ist, um das Mikrofonsignal zu codieren. Dies bringt den Vorteil, dass eine Reduktion der digital zu übertragenden Datenmenge erfolgt. Weiterhin kann durch eine Codierung die Anfälligkeit gegenüber Störungen auf dem Übertragungskanal verringert werden. Dies ist insbesondere dann vorteilhaft, wenn eine digitale drahtlose Verbindung zwischen dem Konferenz-Endgerät und der Konferenz-Zentraleinheit besteht. In ähnlicher Weise enthält das Konferenz-Endgerät bevorzugterweise eine Decodiereinrichtung, die ausgelegt ist, um ein drahtlos übertragenes digitales Konferenz-Summensignal zu decodieren. Dieses Merkmal ist wiederum hilfreich in Verbindung mit einer drahtlosen digitalen Übertragung, da die benötigten Frequenzressourcen durch die Codierung verringert und die Anfälligkeit gegenüber Störungen verbessert werden können. Eine Kodierung kann hierbei sowohl eine Quellenkodierung als auch eine Kanalkodierung umfassen. Eine Quellencodierung ist zweckmäßig, um die zur Übertragung eines Sprachsignals benötigte Datenrate zu verringern. Eine Quellencodierung geht von einem Sprachsignal aus, das in Form eines Datenstroms von zeit- und wertdiskreten Abtastwerten (Pulse Code Modulation, PCM) vorliegt. Daraus wird mit Hilfe einer Codiereinrichtung ein Bitstrom mit einer niedrigeren Datenrate erzeugt, der mit geringerem Ressourcenbedarf auf einem drahtlosen Funkkanal übertragen und in einem Endgerät gespeichert werden kann. Beispiele für eine Codiereinrichtung sind ein Codierer gemäß dem MP3-Standard sowie die aus den Mobilfunkstandards bekannten Codierer (z.B. RPE-LPE Codec). Es kann jedoch ganz allgemein jeder für Sprachübertragung geeignete Codierer verwendet werden. Empfangsseitig ist in jedem Falle ein zugehöriger Decodierer zu verwenden. Neben der Quellencodierung ist gerade bei einer drahtlosen Übertragung eine geeignete Kanalcodierung von großer Bedeutung. Quellencodierte Signale sind aufgrund der geringen darin enthaltenen Redundanz besonders anfällig gegen Bitfehler, die bei der Übertragung entstehen können. Daher ist es zweckmäßig, eine Vorwärtsfehlerkorrektur zu verwenden. Eine solche erhöht zwar die Datenrate, verbessert jedoch gleichzeitig die Qualität der übertragenen Sprachsignale.

Bei einem weiteren bevorzugten Ausführungsbeispiel enthält die Einrichtung zur Echounterdrückung eine Verzögerungseinrichtung, die ausgelegt ist, um das Mikrofonsignal oder ein von dem Mikrofonsignal abgeleitetes Signal um eine Verzögerungszeit zu verzögern. Es ist besonders vorteilhaft, wenn die Verzögerungseinrichtung so ausgelegt ist, dass die Verzögerungszeit einstellbar ist. Eine solche Ausführungsform ermöglicht die Kompensation einer unbekannten Laufzeitdifferenz zwischen den akustischen Signalen auf dem freien akustischen Weg und durch das Sprachkonferenzsystem. Die Laufzeit durch das Sprachkonferenzsystem ist zwar im wesentlichen konstant, die Laufzeit auf dem freien akustischen Weg hängt jedoch stark von der räumlichen Entfernung zwischen sprechenden und hörenden Konferenzteilnehmern ab.

Die Einstellung der Verzögerungszeit erfolgt bevorzugterweise in Abhängigkeit von dem Mikrofonsignal und dem Konferenz-Summensignal. Durch eine geeignete Einrichtung kann die Laufzeitdifferenz zwischen den Signalen, die über das Konferenz-Summensignal und über den freien akustischen Weg empfangen wurden, bestimmt werden. Eine solche Anordnung bietet den großen Vorteil, dass eine manuelle Einstellung der Verzögerungszeit nicht erforderlich ist. Weiterhin ist es möglich, die Echounterdrückung auch dann einzusetzen, wenn sich der Abstand der Konferenzteilnehmer mit der Zeit ändert, z.B. weil diese sich im Raum bewegen.

Während des Sprechbetriebs ist im übrigen eine feste Einstellung der Verzögerungszeit möglich. Diese berechnet sich aus der Signallaufzeit, d.h. aus der Summe der Zeit, die benötigt wird, um das Sprachsignal zu codieren, von dem Konferenz-Endgerät zu der Konferenz-Zentraleinheit zu übertragen, es dort zu decodieren, es dem Konferenz-Summensignal hinzuzufügen sowie das Konferenz-Summensignal wiederum zu codieren, zu übertragen und zu decodieren. Zusätzliche Verzögerungszeiten entstehen in der lokalen Echounterdrückung des Konferenz-Endgeräts sowie in weiteren in dem Signalweg befindlichen Komponenten.

Die Einrichtung zur Geräuschunterdrückung kann in vielerlei Weise ausgebildet sein. Bevorzugt werden hierbei einfache Ausführungsformen, wie z.B. eine Anordnung zur Differenzbildung zwischen dem verzögerten Mikrofonsignal und dem Konferenz-Summensignal. Dies kann sowohl im Zeitbereich als auch im Spektralbereich erfolgen. Auch ein Wiener-Filter, das regelmäßig an das zu unterdrückende Echosignal angepasst wird, kann eine Unterdrückung des Echos bewirken.

Weiterhin ist es vorteilhaft, wenn eine Einrichtung zur Echounterdrückung eine Einrichtung zum Skalieren umfasst. Eine solche ist ausgelegt, um das Mikrofonsignal, das Konferenz-Summensignal oder das Lautsprechersignal zu skalieren. Damit können Lautstärkeschwankungen in dem Echosignal ausgeglichen werden. Damit ist die Echounterdrückung unabhängig von der Lautstärke der bei dem Konferenz-Endgerät eintreffenden Schallwellen. Eine Echounterdrückung funktioniert bei einer solchen Ausführungsform für laute wie leise auf direktem akustischem Weg eintreffende akustische Signale.

Bei einem weiteren bevorzugten Ausführungsbeispiel enthält das Konferenz-Endgerät eine Umschalteinrichtung, die ausgelegt ist, um eine Umschaltung zwischen einem Hörbetrieb und einem Sprechbetrieb, indem das Mikrofonsignal zu der Zentraleinheit übertragen wird, zu ermöglichen. Es ist vorteilhaft, wenn eine Einrichtung zur Echounterdrückung in dem Hörbetrieb so eingestellt werden kann, dass ein entferntes fremdes Echo optimal unterdrückt wird, und in dem Sprechbetrieb so eingestellt werden kann, dass ein eigenes entferntes Echo optimal unterdrückt wird. Damit kann für jeden Betriebsfall eine bestmögliche Sprachqualität erzielt werden, ohne dass sich der Aufwand für die Einrichtung zur Geräuschunterdrückung wesentlich erhöht. Zur Unterdrückung eines eigenen entfernten Echos müssen lediglich andere Parameter eingestellt werden, die Struktur der Einrichtung zur Echounterdrückung kann jedoch unverändert bleiben.

Bei einem weiteren Ausführungsbeispiel kann das Konferenz-Endgerät eine Schwellwerteinrichtung umfassen, die ausgelegt ist, um die Einrichtung zur Geräuschunterdrückung zu deaktivieren, wenn das Mikrofonsignal kleiner als ein vorgegebener Schwellwert ist. Eine solche Einrichtung bringt den Vorteil mit sich, dass keine Geräuschunterdrückung stattfindet, wenn das Mikrofonsignal sehr schwach ist. Dadurch können Sprecher, die am Ort des Hörers auf akustischem Wege nur sehr schwach wahrnehmbar sind, über das Sprachkonferenzsystem wiedergegeben werden. Ist das auf direktem akustischem Wege empfangene akustische Signal nur schwach, dann wird dies von einem Hörer nicht als störend empfunden. Es genügt in einem solchen Fall die Wiedergabe durch das Sprachkonferenzsystem.

Bevorzugte Ausführungsbeispiele der vorliegenden Erfindung wird nachfolgend bezugnehmend auf die beiliegenden Zeichnungen näher erläutert. Es zeigen:
- Fig. 1: Ein Blockschaltbild eines erfindungsgemäßen Konferenz-Endgeräts gemäß einem Ausführungsbeispiel der vorliegenden Erfindung;
- Fig. 2: Einen Ausschnitt aus einem Blockschaltbild eines Sprachkonferenzsystems mit einem erfindungsgemäßen Konferenz-Endgerät mit eingezeichneten Audio-signalen;
- Fig. 3: ein Blockschaltbild eines erfindungsgemäßen Konferenz-Endgeräts gemäß einem Ausführungsbeispiel der vorliegenden Erfindung;
- Fig. 4: einen Ausschnitt aus einem Blockschaltbild eines Sprachkonferenzsystems gemäß dem Stand der Technik mit eingezeichneten Audiosignalen, die zu einem eigenen Echo führen;
- Fig. 5: einen Ausschnitt aus einem Blockschaltbild eines Sprachkonferenzsystems gemäß dem Stand der Technik mit eingezeichneten Audiosignalen, die zu einem fremden Echo führen.

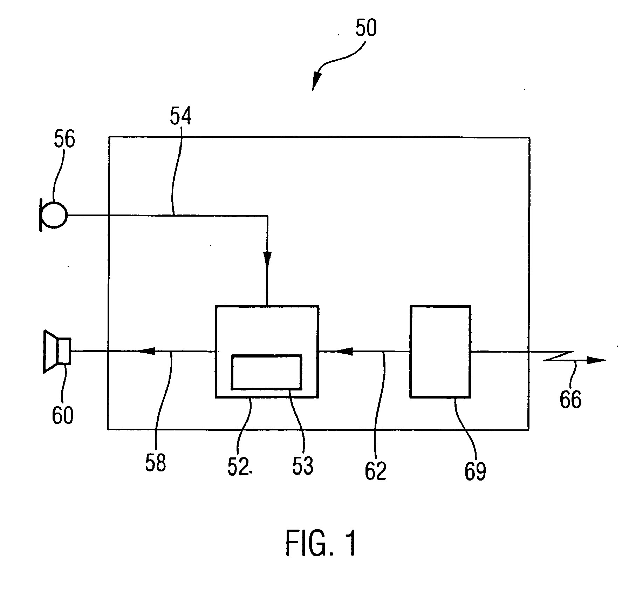

Fig. 1 zeigt ein Blockschaltbild eines erfindungsgemäßen Konferenzendgeräts gemäß einem Ausführungsbeispiel der vorliegenden Erfindung. Das Konferenz-Endgerät ist in seiner Gesamtheit mit 50 bezeichnet. Kern des Konferenzendgeräts 50 ist eine Einrichtung 52 zur Echounterdrückung, die eine Einrichtung 53 zur Geräuschunterdrückung umfasst. Die Einrichtung 52 zur Echounterdrückung empfängt ein Mikrofonsignal 54 von einer ersten Schallwandlereinrichtung 56 und liefert ein Lautersprechersignal 58 an eine zweite Schallwandlereinrichtung 60. Weiterhin wird der Einrichtung 52 zur Echounterdrückung ein Summenkonferenzsignal 62 zugeführt, das eine Verbindungseinrichtung 64 von einer Zentraleinheit empfängt. Die Übertragungsstrecke zwischen der Zentraleinheit und der Verbindungseinrichtung 64 ist hier mit 66 gekennzeichnet.

Die erste Schallwandlereinrichtung 56, die bevorzugt als Mikrofon ausgeführt ist, erzeugt aus einem einfallenden akustischen Signal ein Mikrofonsignal 54. Die zweite Schallwandlereinrichtung 60, die bevorzugt als Lautsprecher ausgeführt ist, erzeugt ein akustisches Signal aus einem Lautsprechersignal 58. Die Einrichtung 52 zur Echounterdrückung hat die Aufgabe, das Mikrofonsignal 54 so mit dem Konferenz-Summensignal 62 zu kombinieren, dass in dem Lautsprechersignal 58 ein akustisches Signal, auf dem das Mikrofonsignal basiert, reduziert ist. Dabei kommt eine in der Einrichtung 52 zur Echounterdrückung enthaltene Einrichtung 53 zur Geräuschunterdrückung zum Einsatz.

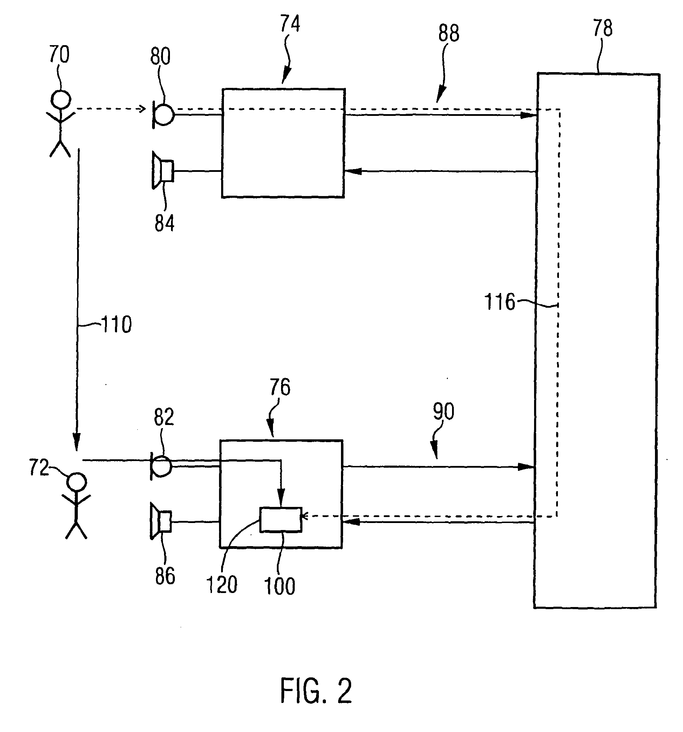

Fig. 2 zeigt einen Ausschnitt aus einem Blockschaltbild eines Sprachkonferenzsystems, das ein erfindungsgemäßes Konferenz-Endgerät aufweist. Weiterhin sind die relevanten akustischen Signale in das Blockschaltbild eingezeichnet. Das Sprachkonferenzsystem wird von zwei Konferenzteilnehmern 70, 72 benutzt, wobei der erste Konferenzteilnehmer 70 die Rolle eines Sprechers einnimmt und der zweite Konferenzteilnehmer 72 die Rolle eines Hörers einnimmt. Das Sprachkonferenzsystem umfasst ein erstes Konferenz-Endgerät 74 sowie ein zweites Konferenz-Endgerät 76. Zu dem Sprachkonferenzsystem gehört weiterhin eine Konferenz-Zentraleinheit 78. Jedes Konferenzendgerät 74, 76 umfasst je ein Mikrofon 80, 82 sowie je einen Lautsprecher 84, 86. Das erste Konferenzendgerät 74 ist über eine erste Verbindung 88 mit der Konferenz-Zentraleinheit 78 verbunden, das zweite Konferenzendgerät 76 ist über eine zweite Verbindung 90 mit der Konferenz-Zentraleinheit 78 verbunden. Weiterhin umfasst das zweite Konferenzendgerät eine Einrichtung 100 zur Echounterdrückung.

Anhand der Struktur des Sprachkonferenzsystems wird im Folgenden die Funktionsweise beschrieben. Dabei wird insbesondere darauf eingegangen, wie ein entferntes fremdes Echo unterdrückt wird. Für die Beschreibung der Funktion wird im Folgenden angenommen, dass das erste Konferenz-Endgerät 74 sich in einem Sprechbetrieb befindet und das zweite Konferenz-Endgerät 76 sich in einem Hörbetrieb befindet. Weiterhin wird davon ausgegangen, dass die beiden Konferenzteilnehmer 70, 72 räumlich so nahe beieinander sind, dass eine direkte akustische Verbindung 110 zwischen beiden besteht. Das heißt z. B., der zweite Konferenzteilnehmer 72 kann den ersten Konferenzteilnehmer 70 auch ohne Einsatz eines Sprachkonferenzsystems hören.

Spricht der erste Konferenzteilnehmer 70, so wird die akustische Information zu dem zweiten Konferenzteilnehmer 72 über den direkten akustischen Weg 110 übertragen. Weiterhin wird die Sprachinformation von dem ersten Konferenzteilnehmer 70 zu dem Konferenz-Endgerät des zweiten Konferenzteilnehmers 72 auch auf einem Signalweg 114 durch das Sprachkonferenzsystem übertragen. Dabei wird das akustische Sprachsignal des ersten Konferenzteilnehmers 70 von dem Mikrofon 80 des ersten Konferenz-Endgeräts 74 aufgenommen. Weiterhin wird das Sprachsignal des ersten Konferenzteilnehmers 70 über die erste Verbindung 88 zu der Konferenz-Zentraleinheit 78 weitergeleitet. Dort wird es in das Konferenz-Summensignal aufgenommen. Als Teil des Konferenz-Summensignals wird das Sprachsignal des ersten Konferenzteilnehmers 70 sodann von der Konferenzzentraleinheit 78 an das zweite Konferenz-Endgerät 76 weitergeleitet und in diesem einer Einrichtung 100 zur Echounterdrückung zugeführt. Der Einrichtung 100 zur Echounterdrückung wird weiterhin ein Mikrofonsignal zugeführt, das auf dem von dem Mikrofon 82 des zweiten Konferenzendgeräts 76 aufgenommenen Schallsignal basiert. Das Mikrofonsignal umfasst damit das Audiosignal, das der zweite Konferenzteilnehmer 72 auf dem direkten akustischen Weg 110 von dem ersten Konferenzteilnehmer 70 empfängt. Dieses ist bis auf etwaige Verzerrungen und eine Verzögerung gleich dem durch den ersten Konferenzteilnehmer 70 verursachten Anteil des Konferenzsummensignals. Die Einrichtung 100 zur Echounterdrückung ist nun so ausgelegt, dass sie den Anteil das Konferenz-Summensignals unterdrückt, der gleich dem Mikrofonsignal ist bzw. dem Mikrofonsignal entspricht. Somit liegt in dem gegebenen Fall an dem Ausgang 120 der Einrichtung 100 zur Echounterdrückung kein Signal an. Folglich wird kein Signal auf dem Lautsprecher 86 des zweiten Konferenz-Endgeräts 76 ausgegeben. Ein entferntes fremdes Echo, das der zweite Konferenzteilnehmer 72 wahrnehmen würde, wenn die Einrichtung 100 zur Echounterdrückung nicht existieren würde, wird somit unterdrückt. Der zweite Konferenzteilnehmer 72 nimmt also ausschließlich das über den direkten akustischen Weg 110 übertragene Sprachsignal des ersten Konferenzteilnehmers 70 wahr.

Es wird hier ausdrücklich darauf hingewiesen, dass es sich bei der beschriebenen Anordnung um einen Ausschnitt aus einem Sprachkonferenzsystem handelt. Ein reales Sprachkonferenzsystem umfasst typischerweise deutlich mehr Teilnehmer. Diese werden hier jedoch nicht gezeigt, um eine klarere Beschreibung der Echounterdrückung zu ermöglichen.

Die Art der Verbindung zwischen einem Konferenz-Endgerät 74, 76 und der Konferenz-Zentraleinheit 78 ist in einem weiten Rahmen wählbar. Bevorzugt wird hierbei eine drahtlose Verbindung, da diese die Einrichtung eines Konferenzsystems mit sehr geringem Installationsaufwand ermöglicht. Außerdem ist es bei einer funkbasierten Lösung möglich, dass sich die Teilnehmer der Konferenz frei im Raum bewegen. Es ist jedoch genauso gut denkbar, eine drahtgebundene Übertragung zu wählen. Dabei kann sowohl eine Punkt-zu-Punkt-Verbindung zwischen Konferenz-Endgerät und Konferenz-Zentraleinheit gewählt werden, als auch eine Busverbindung.

Beispielsweise ist die Verwendung eines bereits bestehenden Ethernet-Netzwerks möglich.

Weiterhin ist es möglich, dass entweder alle Konferenz-Endgeräte direkt an die Zentraleinheit gekoppelt sind, oder dass mehrere Zentraleinheiten vorhanden sind, die wiederum über eine Verbindung gekoppelt sind. Eine solche dezentrale Struktur bringt den Vorteil, dass großräumige Konferenzen geschaltet werden können. Insbesondere bei Verwendung einer drahtlosen Übertragung zwischen Konferenz-Endgerät und Konferenz-Zentraleinheit kann es wünschenswert sein, mehrere Zentraleinheiten einzusetzen, um den maximalen Abstand zwischen dem Konferenz-Endgerät und einer Konferenz-Zentraleinheit zu reduzieren, was die Verwendung einer geringeren Sendeleistung erlaubt. Damit wird die zur Verfügung stehende Funkressource effektiver genutzt.

Auch die räumliche Entfernung zwischen einem ersten Konferenzteilnehmer und einem zweiten Konferenzteilnehmer kann verändert werden. Insbesondere ist es möglich, dass kein direkter akustischer Signalweg zwischen den beiden Konferenzteilnehmern besteht. In einem solchen Fall wird die Einrichtung 110 zur Echounterdrückung nicht aktiv, und der zweite Konferenzteilnehmer 72 hört statt des auf direktem akustischem Wege übertragenen Sprachsignals des ersten Konferenzteilnehmers ein über das Sprachkonferenzsystem übertragene Sprachsignal. Dabei fällt freilich eine Signalverzögerung im Bereich von mehreren 10 Millisekunden an, die sich aber nicht weiter störend auswirkt.

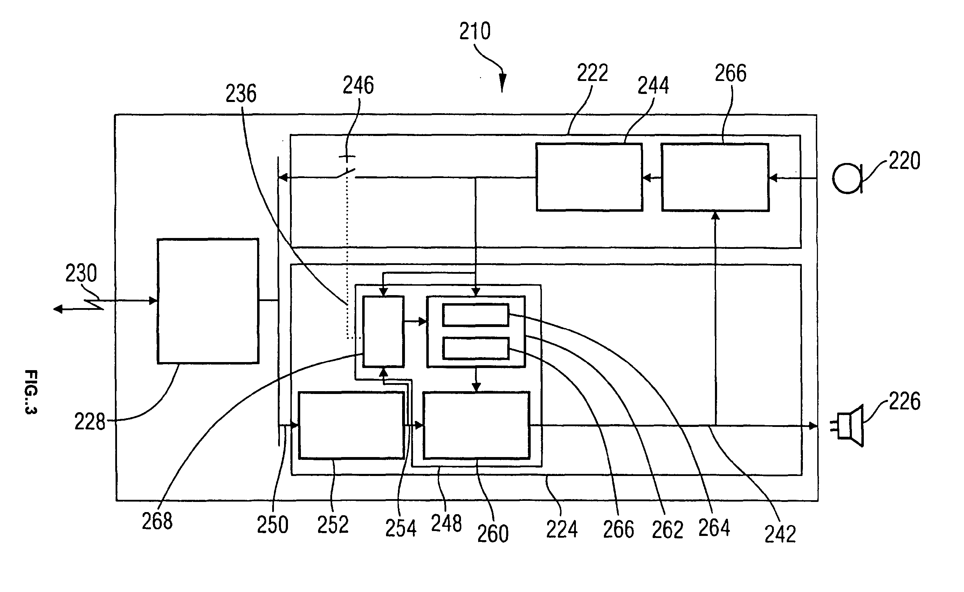

Fig. 3 zeigt ein Blockschaltbild eines erfindungsgemäßen Konferenz-Endgeräts gemäß einem Ausführungsbeispiel der vorliegenden Erfindung, das in seiner Gesamtheit mit 210 bezeichnet ist. Dieses umfasst ein Mikrofon 220, das ein Eingangssignal für einen Sprechzweig 222 liefert. Weiterhin umfasst das Konferenzendgerät 210 einen Hörzweig 224, der ein Ausgangssignal für einen Lautsprecher 226 liefert. Sowohl der Sprechzweig 222 als auch der Hörzweig 224 ist mit einem drahtlosen Sendeempfänger 228 verbunden. Dieser ist ausgelegt, um eine drahtlose Verbindung 230 mit einer Konferenz-Zentraleinheit herzustellen. Der Sprechzweig 222 umfasst eine Einrichtung 240 zur lokalen Echounterdrückung. Diese empfängt ein Signal von dem Mikrofon 220 sowie das Lautsprechersignal 242. Auf die Einrichtung 240 zur lokalen Echounterdrückung folgt in dem Sprechzweig 222 ein Audioencoder 244. Das Ausgangssignal des Audioencoders 244 steht geschaltet durch eine Sprechtaste 246 am Ausgang des Sprechzweigs 222 zur Verfügung und wird dem drahtlosen Sendeempfänger 228 zugeführt. Das Ausgangssignal des Audioencoders 244 wird weiterhin der Einrichtung 248 zur Echounterdrückung des Hörzweigs 224 zugeführt. Ferner empfängt der Hörzweig 244 ein codiertes Konferenz-Summensignal 250 von dem drahtlosen Sendeempfänger 228. Das codierte Konferenzsummensignal 250 wird im Hörzweig 224 einem Audiodecoder 252 zugeführt. Dieser erzeugt daraus ein decodiertes Konferenz-Summensignal 254. Das decodierte Konferenzsummensignal 254 sowie das Ausgangssignal des Audioencoders 244 des Sprechzweigs 222 werden der Einrichtung 248 zur Echounterdrückung zugeführt. Diese erhält ferner noch ein Umschaltsignal 256, das von dem Zustand der Sprechtaste 246 abhängig ist und eine Umschaltung zwischen einem Hörbetrieb und einem Sprechbetrieb signalisiert. Das Ausgangssignal der Einrichtung 248 zur Echounterdrückung ist das Lautsprechersignal 242, das der Einrichtung 240 zur lokalen Echounterdrückung des Sprechzweigs 222 sowie dem Lautsprecher 226 zugeführt wird. Die Einrichtung 248 zur Echounterdrückung umfasst eine Einrichtung 260 zur Geräuschunterdrückung sowie eine Vorverarbeitungseinrichtung 262. Die Vorverarbeitungseinrichtung 262 umfasst einen Audiodecoder 264 sowie eine Verzögerungsleitung mit variabler Länge 266. Weiterhin umfasst die Einrichtung zur 248 zur Echounterdrückung eine Einrichtung 268 zur Einstellung einer Verzögerungszeit.

Im Sprechbetrieb des Konferenz-Endgeräts 210 (Sprechtaste 246 gedrückt) wird ein von dem Mikrofon 220 geliefertes Audiosignal erst einer lokalen Echounterdrückung in einer Einrichtung 240 zur lokalen Echounterdrückung unterzogen. Dann wird es von einem Audioencoder 244 codiert und schließlich durch den drahtlosen Sendeempfänger 228 zu einer Konferenz-Zentraleinheit übertragen. Die Zentraleinheit liefert ein Konferenz-Summensignal, das an dem Ausgang des drahtlosen Sendeempfängers 228 als codiertes Konferenz-Summensignal 250 zur Verfügung steht. Es wird in einem Audiodecoder 252 decodiert.

Schließlich wird ein entferntes eigenes Echo durch eine Einrichtung 248 zur Echounterdrückung entfernt bzw. reduziert. Hierbei wirken eine Vorverarbeitungseinrichtung 262 sowie eine Einrichtung 260 zur Geräuschunterdrückung mit. Das ursprüngliche codierte Audiosignal, das von dem Mikrofon 220 des Konferenz-Endgeräts 210 geliefert wird, wird in dem Audiodecoder 264 der Vorverarbeitungseinrichtung 262 zuerst decodiert und dann in einer Verzögerungsleitung 266, die ebenfalls in der Vorverarbeitungseinrichtung 262 enthalten ist, um eine vordefinierte Verzögerungsdauer verzögert. Die Verzögerungsdauer wird hierbei von einer Einrichtung 268 zur Einstellung einer Verzögerungszeit festgelegt. Sie ist in einem Sprechbetrieb vorgegeben und ermittelt sich aus der Verzögerung des Gesamtsystems. Dies ist z.B. die Summe der Verzögerung des lokalen Echounterdrückers, des Audioencoders, der drahtlosen Übertragungsstrecke, der Summenbildung aller Sprechstellensignale in der Konferenz-zentraleinheit sowie des Audiodecoders. Diese Verzögerungsdauer ist typischerweise mit guter Genauigkeit bekannt. Die eigentliche Echounterdrückung erfolgt durch Entfernen des Echoanteils aus dem Konferenzsummensignal 254. Diese Aufgabe wird durch eine Einrichtung 260 zur Geräuschunterdrückung erfüllt. Im einfachsten Fall kann diese Einrichtung eine zeitliche Differenzbildung benutzen. Das Ausgangssignal der Einrichtung 260 zur Geräuschunterdrückung wird dann auf dem Lautsprecher 226 des Konferenz-Endgeräts 210 ausgegeben.

Im Hörbetrieb des Konferenz-Endgeräts 210 (Sprechtaste 246 nicht gedrückt) wird das von dem Mikrofon 220 aufgenommene Audiosignal weiterhin einer lokalen Echounterdrückung und einer Audiocodierung unterzogen, jedoch nicht an den drahtlosen Sendeempfänger 228 weitergeleitet. Allerdings steht das codierte Mikrofonsignal weiterhin an der Einrichtung 248 zur Echounterdrückung und insbesondere an der Einrichtung 260 zur Geräuschunterdrückung zur Verfügung und wird für die Unterdrückung eines entfernten fremden Echos verwendet. Ein solches ist vorhanden, wenn ein Audiosignal eines anderen Konferenzteilnehmers am Ort des Konferenz-Endgeräts 210 auf direktem akustischem Weg wahrgenommen wird und auch in dem decodierten Konferenzsummensignal 254 vorliegt. Aufgrund der Verzögerungszeit des Sprachkonferenzsystems weist das Signal eines anderen Konferenzteilnehmers in dem decodierten Konferenz-Summensignal 254 eine Verzögerung gegenüber dem auf direktem akustischem Wege wahrnehmbaren Audiosignal auf. Allerdings ist diese Verzögerung nicht genau bekannt. Zwar ist die Laufzeit des Signals über das Sprachkonferenzsystem, wie oben beschrieben, mit guter Genauigkeit berechenbar, die Laufzeit des Audiosignals auf der Luftstrecke von einem entfernten Sprecher bis zu dem lokalen Mikrofon ist allerdings unbekannt, da sie von der Entfernung zwischen zwei Konferenzteilnehmern abhängt. Wiederum wird die Einrichtung 260 zur Geräuschunterdrückung verwendet, um das an dem lokalen Mikrofon 220 anliegende Audiosignal aus dem decodierten Konferenz-Summensignal 254 zu entfernen. Um dies erreichen zu können, muss das an dem Mikrofon 220 aufgenommene Audiosignal in einer Verzögerungsleitung 266 verzögert werden. Die Verzögerungszeit der einstellbaren Verzögerungsleitung 266, die in der Vorverarbeitungseinrichtung 262 enthalten ist, muss hierbei ermittelt werden. Dies kann durch einen geeigneten Vergleich des Mikrofonsignals mit dem decodierten Konferenz-Summensignal 254 in einer Einrichtung 268 zur Bestimmung einer Verzögerungszeit erfolgen (adaptive Verzögerungszeit). Andererseits ist es möglich, bei Kenntnis der Entfernung zwischen den zwei beteiligten Konferenzteilnehmern die Verzögerungszeit zu errechnen, wodurch die Einrichtung 268 zur Bestimmung einer Verzögerungszeit einfacher ausgeführt werden kann und die Audiosignale nicht verwenden muss. Das Entfernen des Echosignals kann beispielsweise durch Subtrahieren des verzögerten Mikrofonsignals von dem von der Konferenz-Zentraleinheit kommenden Konferenz-Summensignal 254 erfolgen.

Bei der Betrachtung der Funktionsweise der Einrichtung 248 zur Echounterdrückung lassen sich somit zwei Betriebszustände unterscheiden. In dem Sprechbetrieb wird das eigene Sprachsignal zu der Konferenz-Zentraleinheit übertragen. Ein eigenes entferntes Echo wird durch die Einrichtung 248 zur Echounterdrückung und insbesondere durch die Einrichtung 260 zur Geräuschunterdrückung kompensiert. Die Zeitkonstanten der einstellbaren Verzögerungsleitung 266 sind fest.

In einem Hörbetrieb wird das Mikrofonsignal des Konferenz-Endgeräts nicht zu der Konferenz-Zentraleinheit übertragen. Es wird aber weiterhin zur Kompensation eines entfernten fremden Echos durch die Einrichtung 248 zur Echounterdrückung und insbesondere durch die Einrichtung 260 zur Geräuschunterdrückung verwendet. Die Zeitkonstanten der einstellbaren Verzögerungsleitung 266 sind adaptiv, d.h. sie werden so an das Konferenzsummensignal 254 bzw. das Mikrofonsignal angepasst, dass eine optimale Unterdrückung eines Echos möglich ist. Die Unterscheidung von Hörbetrieb und Sprechbetrieb geschieht bei diesem Ausführungsbeispiel durch Benutzerbedienung. Der Benutzer betätigt eine Sprechtaste 246, um den Sprechbetrieb zu aktivieren.

Das Konferenz-Endgerät 210 kann in einem weiten Rahmen verändert werden, ohne von dem Kerngedanken der Erfindung abzuweichen. Insbesondere ist es möglich, eine automatische Hör-Sprech-Umschaltung zu realisieren. Hierzu kann beispielsweise eine Sprach/Pause-Detektion (VAD, Voice Activity Detection) verwendet werden. Dies bringt den Vorteil, dass eine manuelle Umschaltung von einem Sprechbetrieb in einen Hörbetrieb nicht mehr notwendig ist. Dies erhöht den Benutzerkomfort des Sprachkonferenzsystems.

Weiterhin sind vielfältige Variationen bei der Bestimmung der Variationen bei der Bestimmung der Verzögerungszeit der einstellbaren Verzögerungsleitung möglich. Insbesondere ist es möglich, das Konferenz-Endgerät mit einer Einrichtung zur manuellen Einstellung einer Verzögerung zu versehen. Eine solche Verzögerung kann aus dem Abstand benachbarter Konferenzteilnehmer ermittelt werden. Dies macht insbesondere dann Sinn, wenn nur wenige benachbarte Konferenzteilnehmer einen störenden Einfluss auf einen gegebenen Teilnehmer ausüben. Vorteil einer solchen Lösung ist, dass sich der Realisierungsaufwand deutlich erniedrigt. Insbesondere entfällt die Notwendigkeit, die Verzögerungszeit aus den Signalverläufen zu extrahieren, was mit einem hohen Rechenaufwand verbunden ist.

Andererseits ist es möglich, eine solche Verzögerungszeit durch Bildung einer Kreuzkorrelationsfunktion zwischen dem Mikrofonsignal und dem decodierten Konferenz-Summensignal zu ermitteln. Ist das von dem Mikrofon aufgenommene Audiosignal verzögert in dem decodierten Konferenzsummensignal enthalten, so äußert sich dies in einem Maximum in der entsprechenden Kreuzkorrelationsfunktion. Vorteil einer solchen Vorgehensweise liegt darin, dass eine a priori Kenntnis der Verzögerungszeit nicht notwendig ist. Somit ist das Sprachkonferenzsystem universell anwendbar und benötigt hinsichtlich der Verzögerungszeit keine Vorkonfiguration. Auch ist unerheblich, wenn sich der Abstand mehrerer Konferenzteilnehmer verändert, z. B. weil diese sich im Raum bewegen.
Die Einrichtung 260 zur Geräuschunterdrückung kann in ganz verschiedener Weise ausgeführt sein. Aufgabe dieser Einrichtung ist es ganz allgemein, einen gegebenen Signalanteil aus dem Summen-Konferenzsignal zu entfernen. Insbesondere soll das von der Verzögerungseinrichtung gelieferte Signal aus dem Summen-Konferenzsignal entfernt werden, da dieses das zu Unterdrückende Echo darstellt. In einem einfachen Fall bildet die Einrichtung zur Geräuschunterdrückung im Zeitbereich die Differenz zwischen dem decodierten Konferenz-Summensignal und dem verzögerten Mikrofonsignal. Eine solche Anordnung ist sehr einfach realisierbar. Weiterhin ist es möglich, das Mikrofonsignal durch eine spektrale Differenzbildung aus dem decodierten Konferenz-Summensignal zu eliminieren. Dazu werden das verzögerte Mikrofonsignal und das Konferenzsummensignal einer (diskreten) Fourier-Transformation unterzogen. Es wird beispielsweise das (diskrete) Leistungsdichtespektrum gebildet. Daraufhin wird das Leistungsdichtespektrum des verzögerten Mikrofonsignals von dem Leistungsdichtespektrum des Konferenz-Summensignals abgezogen. Dies erfolgt für mehrere diskrete Frequenzwerte bzw. für mehrere Frequenzbänder. Das Ergebnis der Subtraktion ist ein neues Leistungsdichtespektrum. Dies wird schließlich in ein Lautsprechersignal zurückgewandelt. Der Vorteil einer solchen Vorgehensweise liegt darin, dass, anders als bei einer direkten Subtraktion der Signale im Zeitbereich, bei der Differenzbildung im Frequenzbereich unter Verwendung eines Leistungsdichtespektrums Phasenbeziehungen keine Rolle spielen. Es kann nämlich wegen der Verwendung von Audiocodierern und Audiodecodierern in dem Sprachkonferenzsystem nicht sichergestellt werden, dass bei der Übertragung des Audiosignals keine Phasenverschiebungen auftreten. Insofern ist eine spektrale Differenzbildung geeignet, ein Signal ohne Einführung von Interferenzeffekten von einem anderen Signal zu subtrahieren bzw. aus einem anderen Signal zu entfernen. Die Unterdrückung des Einflusses von Phasenbeziehungen durch eine spektrale Differenzbildung ist daher sehr gut an die Eigenschaften eines digitalen Übertragungssystems, das Signalcodierer und Signaldecodierer umfasst, angepasst.

In ähnlicher Weise kann ein Wiener-Filter verwendet werden, um ein Störsignal bzw. ein Echosignal aus einem Konferenz-Summensignal zu entfernen. Die Übertragungscharakteristik des Wiener-Filters kann dabei für ein kurzes Segment eines Signals, in dem dieses als stationär angenommen wird, angepasst werden, sobald das Leistungsdichtespektrum des Störsignals (verzögertes Mikrofonsignal) und des gestörten Nutzsignals (Summen-Konferenzsignal) bekannt sind. Die Anwendung eines Wiener-Filters ist hierbei insgesamt einer spektralen Differenzbildung sehr ähnlich. Allerdings erfordert es die Anwendung eines Wiener-Filters, das Audiosignal in kurze Bereiche einzuteilen, in denen dieses im Wesentlichen stationär ist. Für ein solches Segment wird die Übertragungsfunktion des Wiener-Filters berechnet und das Wiener-Filter dann auf das Signal angewendet.

Weiterhin ist es möglich, die Einrichtungen zum Codieren und Decodieren der Audiosignale in der Signalverarbeitungskette zu verschieben. Insbesondere ist es nicht erforderlich, das Mikrofonsignal erst zu codieren und dann in der Einrichtung zur Echounterdrückung wieder zu decodieren. Vielmehr kann der Einrichtung zur Echounterdrückung direkt das uncodierte Mikrofonsignal zugeführt werden.

Daneben kann die Verbindungseinrichtung so ausgelegt ist, dass sie einen Bitstrom erhält und Bits dieses Bitstroms durch eine Mapping-Funktion auf einen Träger abbildet. Die Mapping-Funktion beschreibt dabei eines der aus der Nachrichtentechnik bekannten digitalen Modulationsverfahren. Beispielsweise kann eine Quadratur-Amplitudenmodulation (QAM) oder eine QPSK-Modulation verwendet werden. Es ist jedoch auch jedes andere digitale Modulationsverfahren verwendbar.

Weiterhin kann die Einrichtung zur Echounterdrückung verbessert werden, indem anpassbare Verstärkungen im Geräuschunterdrücker eingeführt werden. Eine solche Maßnahme ermöglicht es, ein Echosignal unabhängig von seinem Pegel zu unterdrücken. Insbesondere ist zu erwarten, dass ein Signal eines anderen Konferenzteilnehmers an dem Mikrofon des Konferenzendgeräts mit einem anderen Pegel ankommt als es in dem Konferenz-Summensignal enthalten ist. Daher ist zur Unterdrückung des Echosignals in dem Konferenz-Summensignal eine Skalierung des daraus zu entfernenden verzögerten Mikrofonsignals nötig. Die Skalierung kann entweder unter Verwendung eines fest vorgegebenen Skalierungsfaktors oder in einer adaptiven, an die Signale angepassten, Weise erfolgen. Letztere Vorgehensweise bringt den Vorteil, dass auch schwache Echos wirkungsvoll unterdrückt werden können. Ein solches Vorgehen ist besonders wichtig, wenn ein fremdes Signal sowohl direkt als auch über die Funkstrecke mit etwa der gleichen Stärke empfangen wird.

Weiterhin ist es möglich, in die Einrichtung zur Echounterdrückung anpassbare Schwellenwerte einzuführen, die bestimmen, ab welchem Pegel des Mikrofonsignals eine Echounterdrückung stattfindet. Es ist nicht wünschenswert, bei Vorhandensein eines sehr schwachen Mikrofonsignals den entsprechenden Signalanteil aus dem Konferenzsummensignal zu entfernen. Es wird vielmehr davon ausgegangen, dass ein entferntes, mit nur geringem Pegel an dem Ort des Konferenzendgeräts direkt hörbares Sprachsignal eines anderen Konferenzteilnehmers über das Konferenzsystem empfangen werden soll. In diesem Fall ist eine Echounterdrückung gerade nicht gewünscht.

Das Sprachkonferenzsystem kann also durch Einführung von anpassbaren Schwellenwerten und Verstärkungen im Geräuschunterdrücker an die Grenzbereiche angepasst werden, wo ein fremdes Signal sowohl direkt als auch über die Funkstrecke mit etwa gleicher Stärke empfangen wird.

Weiterhin ist es möglich, über die drahtlose Schnittstelle von einem Konferenz-Endgerät zu der Konferenz-Zentraleinheit weitere Steuersignale zu übertragen, die eine Auskunft über die Position und Konfiguration des Konferenzendgeräts geben. Damit ist es auch möglich, von der Zentraleinheit aus die Konfiguration des Konferenz-Endgeräts zu beeinflussen. Dies kann ggf. hilfreich sein, um eine Adaption der entsprechenden Parameter eines Konferenz-Endgeräts zu erleichtern.

Die vorliegende Erfindung ermöglicht es also, digitale drahtlose Sprachkonferenzsysteme zu realisieren, die hohe Sprachqualität und Störsicherheit bei minimalem Verdrahtungsaufwand gewährleisten.

## Patentansprüche

1. Konferenz-Endgerät (50) für ein digitales Sprachkonferenzsystem mit folgenden Merkmalen:
Einer ersten Schallwandlereinrichtung (56), die ausgelegt ist, um aus einem akustischen Signal ein Mikrofonsignal (54) zu erzeugen;
einer zweiten Schallwandlereinrichtung (60), die ausgelegt ist, um aus einem Lautsprechersignal (58) ein akustisches Signal zu erzeugen;
einer Verbindungseinrichtung (64), die ausgelegt ist, um eine Verbindung zwischen dem Konferenz-Endgerät (50) und einer Konferenz-Zentraleinheit zu ermöglichen, um von der Konferenz-Zentraleinheit ein Summen-Konferenzsignal (62) zu empfangen; und
einer Einrichtung (52) zur Echounterdrückung, die ausgelegt ist, um in einem Hörbetrieb des Konferenz-Endgeräts das Mikrofonsignal (54) oder ein davon abgeleitetes Signal so mit dem Summen-Konferenzsignal (62) zu kombinieren, dass ein Lautsprechersignal (58) entsteht, in dem das akustische Signal, auf dem das Mikrofonsignal (54) basiert, reduziert ist, oder um in einem Sprechbetrieb, in dem das Mikrofonsignal (54) zu der Konferenz-Zentraleinheit übertragen wird, das Mikrofonsignal (54) oder ein davon abgeleitetes Signal so mit dem Summen-Konferenzsignal zu kombinieren, dass ein Lautsprechersignal (58) entsteht, in dem das akustische Signal, auf dem das Mikrofonsignal (54) basiert, reduziert ist; und
einer Schwellwerteinrichtung, die ausgelegt ist, um die Einrichtung (52) zur Echounterdrückung zu deaktivieren, wenn das Mikrofonsignal kleiner als ein vorgegebener Schwellwert ist.

2. Konferenz-Endgerät (50) gemäß Anspruch 1, bei dem die Verbindungseinrichtung (64) so ausgelegt ist, dass sie eine drahtlose Verbindung zwischen dem Konferenz-Endgerät (50) und der Konferenz-Zentraleinheit ermöglicht.

3. Konferenz-Endgerät (50) gemäß Anspruch 1 oder 2, bei dem die Verbindungseinrichtung (64) so ausgelegt ist, dass sie einen Bitstrom erhält und Bits dieses Bitstroms durch eine Mapping-Funktion auf einen Träger abbildet.

4. Konferenz-Endgerät (50) gemäß einem der Ansprüche 1 bis 3, das ferner eine Codiereinrichtung (244) umfasst, die ausgelegt ist, um das Mikrofonsignal zu codieren, indem es von einer Folge von zeitlichen Abtastwerten in eine Folge von Bits umgesetzt wird.

5. Konferenz-Endgerät (50) gemäß Anspruch 3 oder 4, das ferner eine Decodiereinrichtung (252) umfasst, die ausgelegt ist, um ein drahtlos übertragenes digitales Konferenz-Summensignal (250) zu decodieren oder zu erzeugen.

6. Konferenz-Endgerät (50) gemäß einem der Ansprüche 1 bis 5, bei dem die Einrichtung (52) zur Echounterdrückung eine Verzögerungseinrichtung (262) umfasst, die ausgelegt ist, um das Mikrofonsignal oder ein davon abgeleitetes Signal um eine Verzögerungszeit zu verzögern.

7. Konferenz-Endgerät (50) gemäß Anspruch 6, bei dem die Verzögerungseinrichtung (262) so ausgelegt ist, dass die Verzögerungszeit einstellbar ist.

8. Konferenz-Endgerät (50) gemäß Anspruch 7, bei dem die Einrichtung (52) zur Echounterdrückung eine Einrichtung (268) zur Einstellung der Verzögerungszeit in Abhängigkeit von dem Mikrofonsignal und dem Konferenz-Summensignal (254) umfasst.

9. Konferenz-Endgerät (50) gemäß Anspruch 8, bei dem die Einrichtung (268) zur Einstellung der Verzögerungszeit eine Korrelationseinrichtung umfasst, die ausgelegt ist, um eine Kreuzkorrelationsfunktion zwischen dem Mikrofonsignal und dem Konferenz-Summensignal (254) zu bilden.

10. Konferenz-Endgerät (50) gemäß Anspruch 7, bei dem die Einrichtung (52) zur Echounterdrückung eine Einrichtung zur manuellen Einstellung der Verzögerungszeit umfasst.

11. Konferenz-Endgerät (50) gemäß einem der Ansprüche 6 bis 10, bei dem Verzögerungseinrichtung so ausgelegt ist, dass die Verzögerungszeit in einem Sprechbetrieb auf einen festen Wert eingestellt ist und in einem Hörbetrieb adaptiv in Abhängigkeit von einer Zeitverschiebung zwischen dem Mikrofonsignal und einem in dem Konferenz-Summensignal enthaltenen Anteil, der im Wesentlichen gleich dem Mikrofonsignal ist, eingestellt wird.

12. Konferenz-Endgerät (50) gemäß einem der Ansprüche 6 bis 11, bei dem die Einrichtung (52) zur Echounterdrückung eine Einrichtung (260) zur Geräuschunterdrückung umfasst, die ausgelegt ist, um einen Signalanteil, der im Wesentlichen gleich dem verzögerten Mikrofonsignal ist, in dem Summen-Konferenzsignal zu reduzieren.

13. Konferenz-Endgerät (50) gemäß Anspruch 12, bei dem die Einrichtung (260) zur Geräuschunterdrückung eine Einrichtung zur Differenzbildung zwischen dem Mikrofonsignal oder einem Signal, das von dem Mikrofonsignal abgeleitet ist, und dem Konferenz-Summensignal (254) im Zeitbereich umfasst.

14. Konferenz-Endgerät (50) gemäß Anspruch 12 oder 13, bei dem die Einrichtung (260) zur Geräuschunterdrückung eine Einrichtung zur Differenzbildung zwischen dem Mikrofonsignal oder einem Signal, das von dem Mikrofonsignal abgeleitet ist, und dem Konferenz-Summensignal (254) im Spektralbereich umfasst.

15. Konferenz-Endgerät (50) gemäß einem der Ansprüche 12 bis 14, bei dem die Einrichtung (260) zur Geräuschunterdrückung ein Wiener-Filter umfasst.

16. Konferenz-Endgerät (50) gemäß einem der Ansprüche 1 bis 15, bei dem die Einrichtung (52) zur Echounterdrückung eine Einrichtung zum Skalieren umfasst, die ausgelegt ist, um das Mikrofonsignal, ein Signal das von dem Mikrofonsignal abgeleitet ist, das Konferenz-Summensignal (254) oder das Lautsprechersignal (242) zu skalieren.

17. Konferenz-Endgerät (50) gemäß einem Ansprüche 1 bis 16, das ferner eine Umschalteinrichtung (246) umfasst, die ausgelegt ist, um abhängig von einem Hör/Sprech-Steuersignal eine Umschaltung zwischen dem Hörbetrieb und dem Sprechbetrieb zu ermöglichen.

18. Konferenz-Endgerät gemäß Anspruch 6 und 17, bei dem die Einrichtung zur Echounterdrückung ausgebildet ist, um gesteuert durch das Hör/Sprech-Steuersignal in dem Hörbetrieb eine adaptive Zeitverzögerung in Abhängigkeit von einer Zeitverschiebung zwischen dem Mikrofonsignal und einem in dem Konferenz-Summensignal enthaltenen Anteil, der im Wesentlichen gleich dem Mikrofonsignal ist, einzustellen, und in einem Sprechbetrieb eine feste Verzögerungszeit einzustellen.

## Claims

1. A conference terminal (50) for a digital voice conference system, comprising:
a first sound transducer means (56), which is implemented to generate a microphone signal (54) from an acoustic signal;
a second sound transducer means (60), which is implemented to generate an acoustic signal from a loudspeaker signal (58);
a connecting means (64), which is implemented to enable a connection between the conference terminal (50) and a conference central unit for receiving a composite conference signal (62) from the conference central unit; and
a means (52) for echo suppression, which is implemented to combine the microphone signal (54) or a signal derived therefrom with the composite conference signal (62), in a listening operation of the conference terminal, such that a loudspeaker signal (58) results, in which the acoustic signal, on which the microphone signal (54) is based, is reduced, or to combine the microphone signal (54) or a signal derived therefrom with the composite conference signal, in a talk operation wherein the microphone signal (54) is transmitted to the conference central unit, such that a loudspeaker signal (58) results, in which the acoustic signal, on which the microphone signal (54) is based, is reduced; and
a threshold means, which is implemented to deactivate the means (52) for echo suppression when the microphone signal is smaller than a predetermined threshold.

2. The conference terminal (50) according to claim 1, wherein the connecting means (64) is implemented such that it allows a wireless connection between the conference terminal (50) and the conference central unit.

3. The conference terminal (50) according to claim 1 or 2, wherein the connecting means (64) is implemented such that it receives a bit stream and maps bits of this bit stream by a mapping function onto a carrier.

4. The conference terminal (50) according to one of claims 1 to 3, further comprising an encoding means (244), which is implemented to encode the microphone signal, by converting the same from a sequence of time samples into a sequence of bits.

5. The conference terminal (50) according to claim 3 or 4, further comprising a decoder means (252), which is implemented to decode or generate a wirelessly transmitted digital conference composite signal (250).

6. The conference terminal (50) according to one of claims 1 to 5, wherein the means (52) for echo suppression comprises a delay means (262), which is implemented to delay the microphone signal or a signal derived therefrom by a delay time.

7. The conference terminal (50) according to claim 6, wherein the delay means (262) is implemented such that the delay time can be adjusted.

8. The conference terminal (50) according to claim 7, wherein the means (52) for echo suppression comprises a means (268) for adjusting the delay time in dependence on the microphone signal and the conference composite signal (254).

9. The conference terminal (50) according to claim 8, wherein the means (268) for adjusting the delay time comprises a correlation means, which is implemented to form a cross-correlation function between the microphone signal and the conference composite signal (254).

10. The conference terminal (50) according to claim 7, wherein the means (52) for echo suppression comprises a means for manual adjustment of the delay time.

11. The conference terminal (50) according to one of claims 6 to 10, wherein the delay means is implemented such that the delay time is adjusted to a fixed value in a talk operation and, in a listening operation, is adjusted adaptively in dependence on a time shift between the microphone signal and a portion contained in the conference composite signal, which is mainly equal to the microphone signal.

12. The conference terminal (50) according to one of claims 6 to 11, wherein the means (52) for echo suppression comprises a means (260) for noise suppression, which is implemented to reduce a signal portion, which is substantially equal to the delayed microphone signal, in the composite conference signal.

13. The conference terminal (50) according to claim 12, wherein the means (260) for noise suppression comprises a means for difference formation between the microphone signal or a signal derived from the microphone signal and the conference composite signal (254) in the time domain.

14. The conference terminal (50) according to claim 12 or 13, wherein the means (260) for noise suppression comprises a means for difference formation between the microphone signal or a signal derived from the microphone signal and the conference composite signal (254) in the spectral domain.

15. The conference terminal (50) according to one of claims 12 to 14, wherein the means (260) for noise suppression comprises a Wiener filter.

16. The conference terminal (50) according to one of claims 1 to 15, wherein the means (52) for echo suppression comprises a means for scaling, which is implemented to scale the microphone signal, a signal derived from the microphone signal, the conference composite signal (254) or the loudspeaker signal (242).

17. The conference terminal (50) according to one of claims 1 to 16, further comprising a switching means (246), which is implemented to enable switching between the listening operation and the talk operation independent of a listening/talk control signal.

18. The conference terminal according to claim 6 and 17, wherein the means for echo suppression is implemented to adjust an adaptive time delay in dependence on the time shift between the microphone signal and a portion contained in the conference composite signal, which is substantially equal to the microphone signal, controlled by the listening/talk control signal in the listening operation, and to set a fixed delay time in the talk operation.

## Revendications

1. Terminal de conférence (50) pour un système de conférence verbale numérique, aux caractéristiques suivantes:
un premier moyen de conversion de son (56) qui est réalisé de manière à générer, à partir d'un signal acoustique, un signal de microphone (54);
un deuxième moyen de conversion de son (60) qui est réalisé de manière à générer, à partir d'un signal de haut-parleur (58), un signal acoustique;
un moyen de connexion (64) qui est réalisé de manière à permettre une connexion entre le terminal de conférence (50) et une unité centrale de conférence, pour recevoir de l'unité centrale de conférence un signal de conférence de somme (62); et
un moyen (52) destiné à supprimer l'écho qui est réalisé de manière à combiner, en fonctionnement d'écoute du terminal de conférence, le signal de microphone (54) ou un signal dérivé de ce dernier avec le signal de conférence de somme (62) de sorte qu'il soit obtenu un signal de haut-parleur (58) dans lequel le signal acoustique sur lequel se base le signal de microphone (54) est réduit, ou à combiner, en fonctionnement de parole dans lequel le signal de microphone (54) est transmis à l'unité centrale de conférence, le signal de microphone (54) ou un signal dérivé de ce dernier avec le signal de conférence de somme de sorte qu'il soit obtenu un signal de haut-parleur (58) dans lequel le signal acoustique sur lequel se base le signal de microphone (54) est réduit; et
un moyen de valeur de seuil qui est réalisé de manière à désactiver le moyen (52) destiné à supprimer l'écho lorsque le signal de microphone est inférieur à une valeur de seuil prédéterminée.

2. Terminal de conférence (50) selon la revendication 1, dans lequel le moyen de connexion (64) est réalisé de sorte qu'il permette une connexion sans fil entre le terminal de conférence (50) et l'unité centrale de conférence.

3. Terminal de conférence (50) selon la revendication 1 ou 2, dans lequel le moyen de connexion (64) est réalisé de sorte qu'il reçoive un train binaire et qu'il reproduise les bits de ce train binaire par une fonction de mappage sur un support.

4. Terminal de conférence (50) selon l'une des revendications 1 à 3, qui comporte par ailleurs un moyen de codage (244) qui est réalisé de manière à coder le signal de microphone en le convertissant d'une succession de valeurs de balayage dans le temps en une succession de bits.

5. Terminal de conférence (50) selon la revendication 3 ou 4, qui comporte par ailleurs un moyen de décodage (252) qui est réalisé de manière à décoder ou à générer un signal de somme de conférence numérique (250) transmis sans fil.

6. Terminal de conférence (50) selon l'une des revendications 1 à 5, dans lequel le moyen (52) destiné à supprimer l'écho comporte un moyen de temporisation (262) qui est réalisé de manière à retarder le signal de microphone ou un signal dérivé de ce dernier d'un temps de retard.

7. Terminal de conférence (50) selon la revendication 6, dans lequel le moyen de temporisation (262) est réalisé de sorte que le temps de retard soit réglable.

8. Terminal de conférence (50) selon la revendication 7, dans lequel le moyen (52) destiné à supprimer l'écho comporte un moyen (268) destiné à régler le temps de retard en fonction du signal de microphone et du signal de somme de conférence (254).

9. Terminal de conférence (50) selon la revendication 8, dans lequel le moyen (268) destiné à régler le temps de retard comporte un moyen de corrélation qui est réalisé de manière à former une fonction de corrélation croisée entre le signal de microphone et le signal de somme de conférence (254).

10. Terminal de conférence (50) selon la revendication 7, dans lequel le moyen (52) destiné à supprimer l'écho comporte un moyen de réglage manuel du temps de retard.

11. Terminal de conférence (50) selon l'une des revendications 6 à 10, dans lequel le moyen de temporisation est réalisé de sorte que le temps de retard soit réglé, en fonctionnement de parole, à une valeur fixe et, en fonctionnement d'écoute, de manière adaptive en fonction d'un décalage dans le temps entre le signal de microphone et une part contenue dans le signal de somme de conférence qui est sensiblement égale au signal de microphone.

12. Terminal de conférence (50) selon l'une des revendications 6 à 11, dans lequel le moyen (52) destiné à supprimer l'écho comporte un moyen (260) destiné à supprimer le bruit qui est réalisé de manière à réduire dans le signal de conférence de somme une part de signal qui est sensiblement égale au signal de microphone retardé.

13. Terminal de conférence (50) selon l'invention 12, dans lequel le moyen (260) destiné à supprimer le bruit comporte un moyen de formation de différence entre le signal de microphone ou un signal qui est dérivé du signal de microphone et le signal de somme de conférence (254) dans le domaine du temps.

14. Terminal de conférence (50) selon l'invention 12 ou 13, dans lequel le moyen (260) destiné à supprimer le bruit comporte un moyen de formation de différence entre le signal de microphone ou un signal qui est dérivé du signal de microphone et le signal de somme de conférence (254) dans le domaine spectral.

15. Terminal de conférence (50) selon l'une des revendications 12 à 14, dans lequel le moyen (260) destiné à supprimer le bruit comporte un filtre de Wiener.

16. Terminal de conférence (50) selon l'une des revendications 1 à 15, dans lequel le moyen (52) destiné à supprimer l'écho comporte un moyen destiné à moduler est réalisé de manière à moduler le signal de microphone, un signal qui est dérivé du signal de microphone, le signal de somme de conférence (254) ou le signal de haut-parleur (242).

17. Terminal de conférence (50) selon l'une des revendications 1 à 16, qui comporte par ailleurs un moyen ultrasonore (246) qui est réalisé de manière à permettre, en fonction d'un signal de commande d'écoute/de parole, une commutation entre le fonctionnement d'écoute et le fonctionnement de parole.

18. Terminal de conférence selon la revendication 6 et 17, dans lequel le moyen destiné à supprimer l'écho est réalisé de manière à régler, commandé par le signal de commande d'écoute/de parole, en fonctionnement d'écoute une temporisation adaptive en fonction d'un décalage dans le temps entre le signal de microphone et une part contenue dans le signal de somme de conférence qui est sensiblement égale au signal de microphone, et, en fonctionnement de parole, un temps de retard fixe.
